# EUROPÄISCHE PATENTSCHRIFT

(11) **EP 1 254 310 B1**
(45) Veröffentlichungstag und Bekanntmachung des Hinweises auf die Patenterteilung: **13.07.2005**
(21) Anmeldenummer: 01951161.7
(22) Anmeldetag: 26.01.2001
(51) Int. Cl.: F02D 35/02, F02D 41/40

(54) **REGELSYSTEM FÜR EINE BRENNKRAFTMASCHINE**
SYSTEM FOR REGULATING AN INTERNAL COMBUSTION ENGINE
SYSTEME DE REGLAGE D'UN MOTEUR A COMBUSTION INTERNE

(30) Priorität: 12.02.2000 DE 10006341
(43) Veröffentlichungstag der Anmeldung: 06.11.2002
(73) Patentinhaber: MTU Friedrichshafen GmbH, 88040 Friedrichshafen (DE)
(72) Erfinder: DÖLKER, Armin, 88090 Immenstaad (DE); SPÄGELE, Thomas, 88069 Tettnang (DE); WEHLER, Klaus, 88046 Friedrichshafen (DE)
(86) Internationale Anmeldenummer: PCT/EP2001/000841
(87) Internationale Veröffentlichungsnummer: WO 2001/059281

(56) Entgegenhaltungen:
- DE-A- 3 641 854
- DE-A- 3 912 416
- DE-A- 19 705 463
- DE-C- 4 446 246
- US-A- 4 679 536
- PATENT ABSTRACTS OF JAPAN vol. 006, no. 017 (M-109), 30. Januar 1982 (1982-01-30) & JP 56 135750 A (HITACHI ZOSEN CORP), 23. Oktober 1981 (1981-10-23)

## Beschreibung

Die Erfindung betrifft ein Regelsystem für eine Brennkraftmaschine, bei der über die Veränderung des Einspritzbeginns der Verbrennungs-Höchstdruck geregelt wird.

Aus der von der Anmelderin stammenden DE 44 46 246 C1 ist ein Regelsystem für eine Brennkraftmaschine bekannt. Bei diesem wird der Verbrennungs-Höchstdruck über die Veränderung des Einspritzbeginns geregelt. Durch die variable Verstellbarkeit des Einspritzbeginns ist das gesamte Motorbeschleunigungspotential nutzbar, z. B. bei Lastaufschaltung. Auftretende Fehler, z. B. Zündaussetzer, sind bei diesem Regelverfahren jedoch noch nicht berücksichtigt.

Ausgehend vom zuvor beschriebenen Stand der Technik liegt der Erfindung die Aufgabe zugrunde, das Regelsystem in Bezug auf Betriebssicherheit weiterzuentwickeln.

Die Aufgabe wird erfindungsgemäß durch die Merkmale des Anspruchs 1 gelöst. Weitere vorteilhafte Ausgestaltungen sind in den Unteransprüchen enthalten.

Bei dem erfindungsgemäßen Regelsystem wird der Verbrennungs-Höchstdruck mittels einer Ausreißer-Erkennung diagnostiziert. Die Ausreißer-Erkennung bestimmt einen ersten oder zweiten Modus und setzt in Abhängigkeit der Modi einen Diagnosewert. Hierzu berechnet die Ausreißer-Erkennung aus einem ersten und einem n-ten Verbrennungs-Höchstdruckwert einen Mittelwert und bestimmt für die zwischen dem ersten und n-ten Verbrennungs-Höchstdruck liegenden Werte deren Abweichung zum Mittelwert. Bei tolerierbaren Abweichungen wird der erste Modus gesetzt. Im ersten Modus wird sodann der Diagnosewert auf den Verbrennungs-Höchstdruckwert gesetzt. Ist die Abweichung nicht tolerierbar, so wird der zweite Modus gesetzt. Im zweiten Modus entspricht der Diagnosewert dem Mittelwert.

Der zuvor bestimmte Diagnosewert wird zusammen mit einem Verbrennungs-Höchstdruck-Sollwert auf einen Einspritzbeginn-Regler geführt, der aus dieser Regelabweichung den Einspritzbeginn bestimmt. Bei einer negativen Regelabweichung wird der Einspritzbeginn nach spät verändert. Eine negative Regelabweichung liegt dann vor, wenn der Diagnosewert größer ist als der Verbrennungs-Höchstdruck-Sollwert. Bei einer positiven Regelabweichung wird der Einspritzbeginn nach früh verändert. Eine positive Regelabweichung liegt dann vor, wenn der Diagnosewert kleiner als der Verbrennungs-Höchstdruck-Sollwert ist, d. h. wenn noch ein zusätzliches Druckpotential verfügbar ist.

Der Vorteil der Erfindung ist darin zu sehen, dass stochastische Fehler, insbesondere Zündaussetzer, wirksam eliminiert werden. Hierdurch wird die Qualität des Regelsystems wesentlich erhöht. Als weitere Maßnahme zum Schutz des Regelsystems ist erfindungsgemäß ein Begrenzungsglied vorgesehen.

In einer Ausgestaltung der Erfindung ist es vorgesehen, dass in die Berechnung des Einspritzbeginns zusätzlich ein Einspritzbeginn-Vorsteuerwert miteingeht. Dieser Einspritzbeginn-Vorsteuerwert wird mittels eines Kennfelds berechnet. Dieses Kennfeld stellt eine Funktion der Motordrehzahl und eines leistungsbestimmenden Signals dar. Unter leistungsbestimmendem Signal ist im Sinne der Erfindung eine Einspritzmenge oder ein Regelweg einer Regelstange zu verstehen. Über die Vorsteuerung wird der Vorteil einer kurzen Reaktionszeit auf eine unmittelbare Laständerung erzielt.

Gegenüber dem aus dem Stand der Technik bekannten Regelsystem unterscheidet sich die Erfindung zusatzlich darin, dass die Regelung in jedem Motorbetriebspunkt und nicht nur bei Lastaufschaltung erfolgt.

Das in der Erfindung dargestellte Regelsystem ist bei Brennkraftmaschinen in Common-Rail-Bauweise, PLD-Bauweise (Pumpe-Leitung-Düse) oder konventioneller Bauweise einsetzbar.

In den Figuren ist ein bevorzugtes Ausführungsbeispiel dargestellt. Es zeigen:
- Figur 1: Ein Systemschaubild
- Figur 2: Blockschaltbild
- Figur 3: Blockschaltbild
- Figur 4: Regelkreis-Struktur
- Figur 5: Blockschaltbild Einspritzbeginn-Vorsteuerung
- Figur 6: Einspritzbeginn-Regler
- Figur 7: Zeitdiagramm
- Figur 8: Programmablaufplan

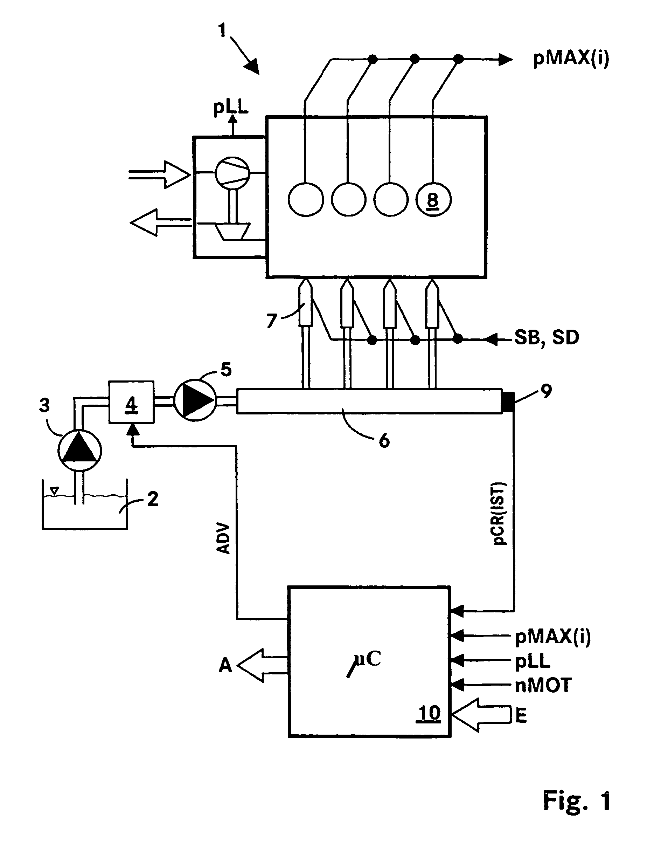

In Figur 1 ist ein Blockschaltbild einer Brennkraftmaschine mit Speichereinspritzsystem (Common-Rail) dargestellt. Dieses zeigt eine Brennkraftmaschine 1 mit Turbolader und Ladeluftkühler, ein elektronisches Motorsteuergerät 10, eine erste Pumpe 3, eine zweite Pumpe 5, einen Hochdruckspeicher (Rail) 6, daran angeschlossene Injektoren 7 und ein Drosselventil 4. Die erste Pumpe 3 fördert aus einem Kraftstofftank 2 den Kraftstoff via dem Drosselventil 4 zur zweiten Pumpe 5. Diese wiederum fördert den Kraftstoff unter hohem Druck in den Hochdruckspeicher 6. Das Druckniveau des Hochdruckspeichers 6 wird über einen Rail-Drucksensor 9 erfasst. Aus dem Hochdruckspeicher 6 zweigen Leitungen mit daran angeschlossenen Injektoren 7 für jeden Zylinder der Brennkraftmaschine 1 ab.

Das elektronische Motorsteuergerät 10 steuert und regelt den Zustand der Brennkraftmaschine 1. Dieses weist die üblichen Bestandteile eines Mikrocomputersystems auf, beispielsweise Mikroprozessor, I/O-Bausteine, Puffer und Speicherbausteine (EEPROM, RAM). In den Speicherbausteinen sind die für den Betrieb der Brennkraftmaschine 1 relevanten Betriebsdaten in Kennfeldern/Kennlinien appliziert. Die in Figur 1 exemplarisch dargestellten Eingangsgrößen des elektronischen Motorsteuergeräts 10 sind: Verbrennungs-Höchstdruck pMAX(i), der mittels Drucksensoren 8 gemessen wird, Druck pCR(IST) des Hochdruckspeichers 6, Druckniveau des Turboladers pLL und Drehzahl nMOT der Brennkraftmaschine 1. Die weiteren für den Betrieb der Brennkraftmaschine 1 relevanten Eingangsgrößen sind mit dem Bezugszeichen E dargestellt. Als Ausgangsgrößen A des elektronischen Motorsteuergeräts 10 sind die Ansteuersignale für die Injektoren 7, entsprechend dem Einspritzbeginn SB und der Einspritzdauer SD, und das Ansteuersignal ADV für das Drosselventil 4 dargestellt. Über das Drosselventil 4 wird der Zulauf zur zweiten Pumpe 5 eingestellt.

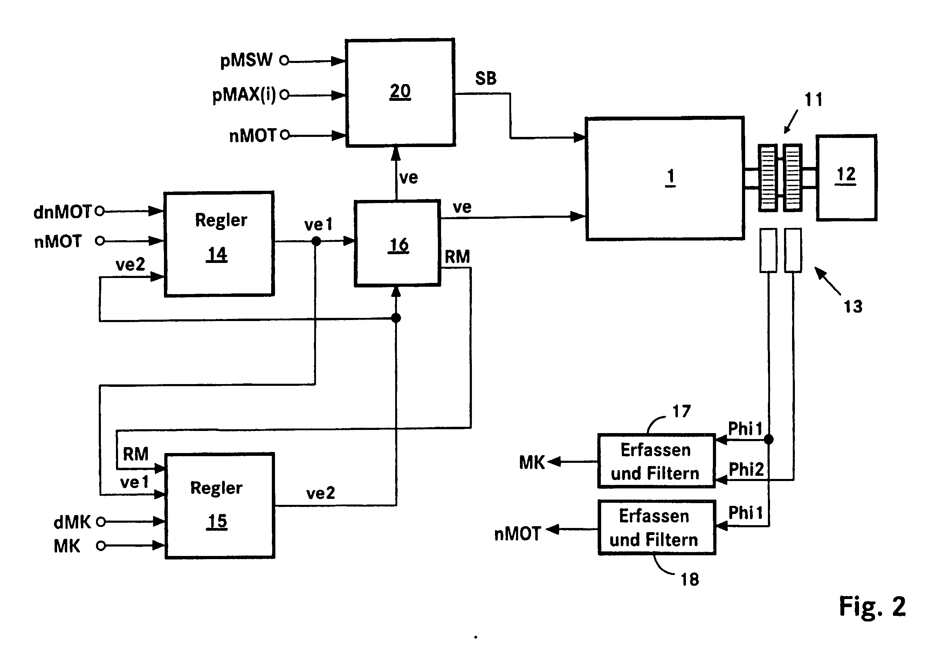

Figur 2 zeigt ein Blockschaltbild des Regelsystems der Brennkraftmaschine 1 mit gekoppelter Regelkreisstruktur. Dargestellt sind: ein Drehzahl-Regler 14, ein Motor-Moment-Regler 15, ein Auswahlmittel 16, ein Einspritzbeginn-Regler 20 und die Brennkraftmaschine 1 mit dem Einspritzsystem. Die Brennkraftmaschine 1 treibt via einer Kupplung 11 eine Motorlast 12 an, zum Beispiel einen Waterjet-Antrieb. Die Zahnwinkel Phi1 und Phi2 der Kupplung 11 werden von Drehzahlsensoren 13 detektiert. Aus dem Zahnwinkel Phi 1 wird über den Funktionsblock Erfassen/Filtern 18 die Motordrehzahl nMOT berechnet. Über den Funktionsblock Erfassen/Filtern 17 wird aus den beiden Zahnwinkeln Phi1 und Phi2 das Motor-Moment MK am Abtrieb der Brennkraftmaschine 1 ermittelt. Alternativ zum gemessenen Motor-Moment MK kann dieses auch mittels eines mathematischen Modells berechnet werden. Beispielsweise kann das mathematische Modell eine thermodynamische Abbildung der Brennkraftmaschine enthalten.

Die Eingangsgrößen des Drehzahl-Reglers 14 sind: die Motordrehzahl nMOT, eine Drehzahldifferenz dnMOT und ein Signal ve2. Die Drehzahldifferenz berechnet sich aus der Motordrehzahl nMOT und einem den Leistungswunsch kennzeichnenden Sollwert. Das Signal ve2 entspricht dem Ausgangssignal des Motor-Moment-Reglers 15. Die Ausgangsgröße des Drehzahl-Reglers 14 ist ein Signal ve 1. Dieses ist auf das Auswahlmittel 16 und den Motor-Moment-Regler 15 geführt. Die Eingangsgrößen des Motor-Moment-Reglers 15 sind: das Motor-Moment MK, ein Differenzmoment dMK, das Signal ve 1 und ein Reglermodus RM. Das Differenzmoment dMK berechnet sich aus dem Motor-Moment MK und einem maximal zulässigen Motor-Moment. Das Ausgangssignal des Motor-Moment-Reglers 15 ist das Signal ve2. Dieses ist auf das Auswahlmittel 16 und den Drehzahl-Regler 14 geführt.

Über das Auswahlmittel 16 wird festgelegt, welcher der beiden Regler 14 bzw. 15 dominant ist. Hierzu enthält das Auswahlmittel 16 eine Minimalwertauswahl. Über die Minimalwertauswahl wird als leistungsbestimmendes Signal ve das Signal ve 1 gesetzt, wenn das Signal ve 1 kleiner oder gleich dem Signal ve2 ist. Für diesen Fall wird der Reglermodus RM auf einen ersten Wert gesetzt. Dies entspricht einem Betneb der Brennkraftmaschine im Drehzahl-Modus. Als leistungsbestimmendes Signal ve wird das Signal ve2 gesetzt, wenn dieses kleiner als das Signal ve 1 ist. In diesem Fall wird der Reglermodus RM auf einen zweiten Wert gesetzt. Dies entspricht einem Betrieb der Brennkraftmaschine im Moment-Begrenzungs-Modus. Die Ausgangssignale des Auswahlmittels 16 sind das leistungsbestimmende Signal ve und der Reglermodus RM. Das leistungsbestimmende Signal ve wird auf die Einspritzeinrichtung der Brennkraftmaschine 1 und den Einspritzbeginn-Regler 20 geführt. Unter leistungsbestimmendem Signal ve ist im Sinne der Erfindung die Einspritzmenge oder der Regelweg einer Regelstange zu verstehen.

Die Eingangsgrößen des Einspritzbeginn-Reglers 20 sind: die Motordrehzahl nMOT, der Verbrennungs-Höchstdruck pMAX(i), der Verbrennungs-Höchstdruck-Sollwert pMSW und das vom Auswahlmittel 16 bereitgestellte leistungsbestimmende Signal ve. Die Ausgangsgröße des Einspritzbeginn-Reglers 20 ist der Einspritzbeginn SB, welcher auf die Brennkraftmaschine 1 geführt ist.

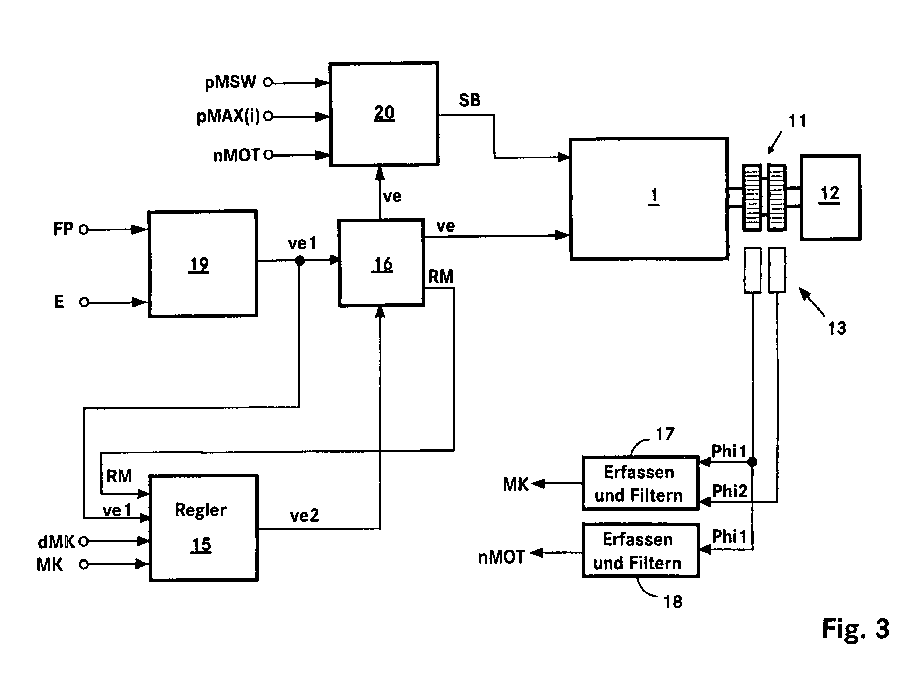

Figur 3 zeigt eine alternative Ausführung des Blockschaltbildes der Figur 2. Im Unterschied zur Figur 2 wird bei diesem Blockschaltbild das Signal ve 1 über einen Funktionsblock 19 in Abhängigkeit eines Leistungswunsches, hier Fahrpedal FP, berechnet. Der Funktionsblock 19 beinhaltet die Umrechnung der Fahrpedalstellung in das Signal ve 1. Hierzu sind entsprechende Kennlinien einschließlich einer Begrenzung vorgesehen. Die für die Umrechnung erforderlichen Eingangsgrößen sind mit dem Bezugszeichen E dargestellt, beispielsweise Motordrehzahl nMOT, Ladeluftdruck pLL usw.

Ein weiterer Unterschied besteht darin, dass das Signal ve2 bei dem Blockschaltbild gemäß der Figur 3 ausschließlich auf das Auswahlmittel 16 geführt ist. Gegenüber der Figur 2 entfällt der Soll-/Ist-Vergleich der Motordrehzahl, da der Leistungswunsch über ein Fahrpedal vorgegeben wird. Der weitere Aufbau entspricht dem der Figur 2, so dass das dort Gesagte gilt.

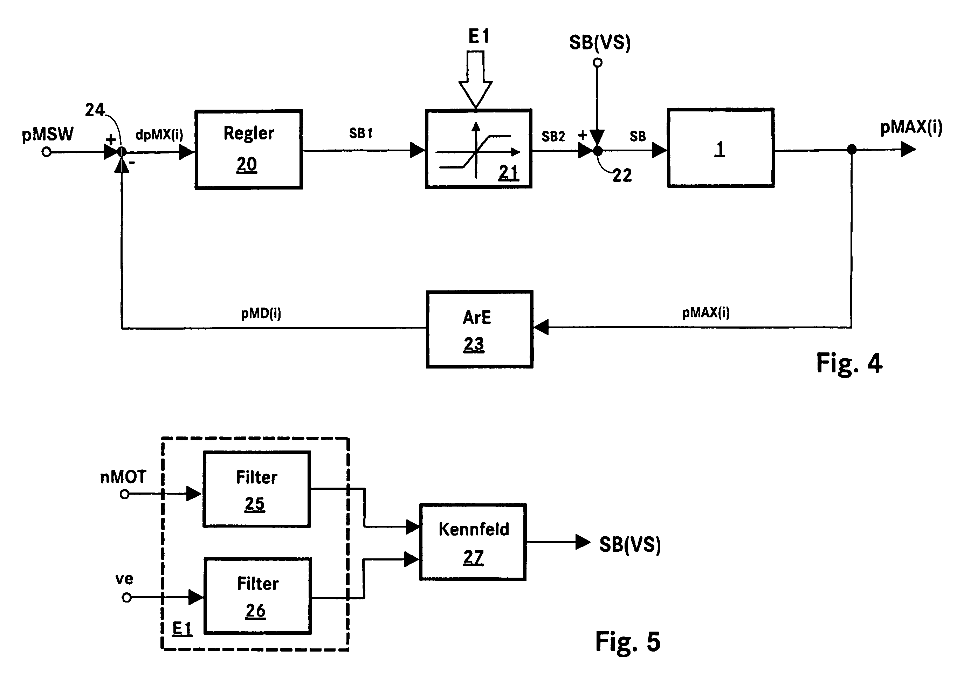

In Figur 4 ist der Regelkreis für den Einspritzbeginn dargestellt. Dieser umfasst: den Einspritzbeginn-Regler 20, ein Begrenzungsglied 21, die Brennkraftmaschine 1, entsprechend der Regelstrecke, und die Ausreißer-Erkennung (ArE) 23. Die Eingangsgrößen des Regelkreises sind der Verbrennungs-Höchstdruck-Sollwert pMSW, eine Eingangsgröße E 1 und ein Einspritzbeginn-Vorsteuerwert SB(VS). Die Ausgangsgröße des Regelsystems ist der Verbrennungs-Höchstdruck pMAX(i). Dieser wird mittels den Drucksensoren 8, wie in Figur 1 dargestellt, erfasst. Der Verbrennungs-Höchstdruck pMAX(i) ist die Eingangsgröße für die Ausreißer-Erkennung 23. Diese diagnostiziert den Verbrennungs-Höchstdruck. In Abhängigkeit der diagnostizierten Werte wird sodann ein erster oder zweiter Modus bestimmt. In Abhängigkeit der Modi setzt die Ausreißer-Erkennung 23 einen Diagnosewert pMD(i). Im ersten Modus entspricht der Diagnosewert pMD(i) dem Verbrennungs-Höchstdruck pMAX(i). Im zweiten Modus entspricht der Diagnosewert pMD(i) einem berechneten Mittelwert.

Für die weitere Erläuterung wird von einem Beispiel ausgegangen, bei dem drei Verbrennungs-Höchstdruckwerte zeitlich nacheinander erfasst wurden. Zum Zeitpunkt t(i) wird aus dem ersten und dritten Verbrennungs-Höchstdruckwert ein Mittelwert berechnet. Danach wird vom zweiten Messwert der Mittelwert subtrahiert. Diese Abweichung gilt als Maß dafür, wie plausibel dieser zweite Messwert ist. Ist diese Abweichung kleiner als ein Grenzwert, z. B. - 5 bar, so wird der Diagnosewert pMD(i) auf den zuvor berechneten Mittelwert gesetzt. Danach wird der Vorgang zum Zeitpunkt t(i+1) wiederholt.

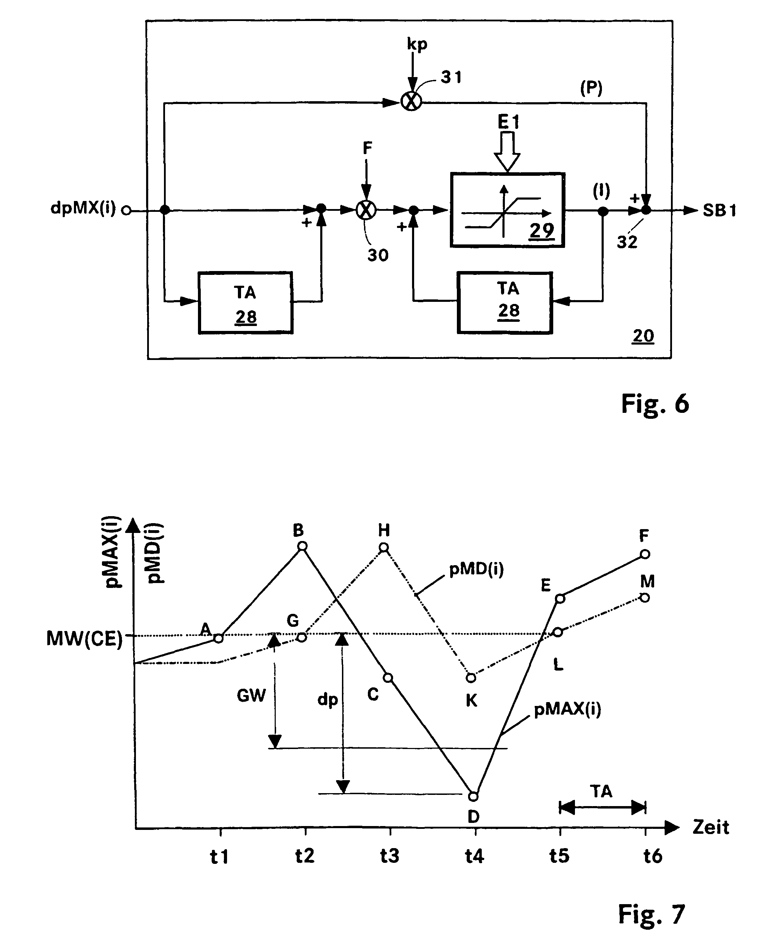

Aus dem Diagnosewert pMD(i) und dem Verbrennungs-Höchstdruck-Sollwert pMSW wird die Regelabweichung dpMX(i) über die Summation 24 bestimmt. Der Sollwert wird mittels eines Kennfelds aus der Motordrehzahl nMOT und dem leistungsbestimmenden Signal ve berechnet. Die Regelabweichung dpMX(i) ist die Eingangsgröße des Einspritzbeginn-Reglers 20. Die Ausgangsgröße des Einspritzbeginn-Reglers 20 ist der Einspritzbeginn, in Figur 4 mit SB1 bezeichnet. Bei einer negativen Regelabweichung wird der Einspritzbeginn nach spät verändert. Eine negative Regelabweichung liegt dann vor, wenn der Diagnosewert pMD(i) größer ist als der Verbrennungs-Höchstdruck-Sollwert pMSW. Bei einer positiven Regelabweichung wird der Einspritzbeginn nach früh verändert. Eine positive Regelabweichung liegt dann vor, wenn der Diagnosewert pMD(i) kleiner als der Verbrennungs-Höchstdruck-Sollwert pMSW ist, d. h. wenn noch ein zusätzliches Druckpotential verfügbar ist. Die innere Struktur des Einspritzbeginn-Reglers 20 ist in Figur 6 dargestellt und wird in Verbindung mit dieser erläutert.

Der Einspritzbeginn SB1 ist auf ein Begrenzungsglied 21 geführt. Über das Begrenzungsglied 21 werden die Veränderungen des Einspritzbeginns limitiert. In der Praxis hat sich ein Wert von +/- 5° Kurbelwellenwinkel bewährt. Die Begrenzung kann über einen Min-/Max-Wert oder eine Kennlinie oder ein Kennfeld erfolgen. Beim Min-/Max-Wert werden die Veränderungen des Einspritzbeginns auf einen minimal MIN und maximal zulässigen Wert MAX begrenzt. Erfolgt die Begrenzung über eine Kennlinie, so stellt diese eine Funktion der Motordrehzahl nMOT bzw. der gefilterten Motordrehzahl dar. Alternativ kann die Kennlinie auch eine Funktion des leistungsbestimmenden Signals ve bzw. dem gefilterten leistungsbestimmenden Signal darstellen. Wird ein Kennfeld verwendet, so wird dem Begrenzungsglied 21 eine weitere Eingangsgröße E 1 zugeführt. Die Eingangsgröße E1 entspricht, wie in Figur 5 dargestellt, der mittels eines Filters 25 gefilterten Motordrehzahl nMOT und dem mittels eines Filters 26 gefilterten leistungsbestimmenden Signal ve. Die Ausgangsgröße des Begrenzungsglieds 21 ist ein Einspritzbeginn SB2. Dieser wird am Summationspunkt 22 mit dem Einspritzbeginn-Vorsteuerwert SB(VS) additiv verknüpft. Der Einspritzbeginn-Vorsteuerwert SB(VS) wird mittels eines Kennfelds 27 aus der Motordrehzahl nMOT und dem leistungsbestimmenden Signal ve, beziehungsweise deren gefilterten Werte, festgelegt. Die Bestimmung des Vorsteuerwerts SB(VS) ist in Figur 5 dargestellt. Die Vorsteuerung bietet den Vorteil, daß der Einspritzbeginn SB bei Änderung des Betriebspunktes den neuen stationären Wert schneller erreicht. In einer einfacheren Ausführung der Erfindung kann das Regelsystem auch ohne Vorsteuerung ausgeführt sein.

Der aus den beiden Größen SB2 und SB(VS) resultierende Einspritzbeginn SB wird sodann auf die Brennkraftmaschine 1 geführt. Damit ist der Regelkreis geschlossen.

Um eine höhere stationäre Genauigkeit der Verbrennungs-Höchstdruck-Regelung zu erreichen, kann vorgesehen sein, dass der Ausreißer-Erkennung 23 ein Filter nachgeschaltet ist. Dieses ist in Figur 4 nicht dargestellt. Über dieses Filter wird verhindert, dass sprungförmige Änderungen des Verbrennungs-Höchstdruck-Sollwerts pMSW eine sprungförmige Antwort des Verbrennungs-Höchstdrucks pMAX(i) bewirken.

In Figur 6 ist die innere Struktur des Einspritzbeginn-Reglers 20 vereinfacht dargestellt. Dieser besteht im wesentlichen aus einem Begrenzungsglied 29 sowie zwei exemplarisch für die Abtastzeit TA stehenden Funktionsblöcken 28. Die Eingangsgröße des Einspritzbeginn-Reglers ist die Regelabweichung dpMX(i). Die Ausgangsgröße ist der Einspritzbeginn, hier SB1. In Figur 6 ist ein PI-Regler dargestellt. Die Regelabweichung dpMX(i) wird an einer Summationsstelle mit einer um eine Abtastzeit (TA 28) verzögerten Regeldifferenz addiert und an einem Multiplikationspunkt 30 mit einem Faktor F verknüpft. Der Faktor F stellt hierbei eine Funktion eines Proportionalbeiwerts kp, der Abtastzeit TA und einer Zeitkonstanten Tn dar. Die Zeitkonstante Tn kann entweder konstant sein oder in Abhängigkeit der Motordrehzahl nMOT berechnet werden. Das berechnete Produkt wird an einem Summationspunkt mit einer um eine Abtastzeit (TA 28) verzögerten Ausgangsgröße (I) des Begrenzungsglieds 29 verknüpft. Das Begrenzungsglied 29 limitiert den integrierenden Anteil (I-Anteil). Das Begrenzungsglied 29 kann hierbei wie das Begrenzungsglied 21 der Figur 4 ausgeführt sein. Der I-Anteil wird am Summationspunkt 32 mit einem Proportional-Anteil (P-Anteil) verknüpft. Das Ergebnis stellt den Einspritzbeginn, hier SB1, dar. Der P-Anteil berechnet sich aus der Regelabweichung dpMX(i) und einem Proportionalbeiwert kp. Diese sind multiplikativ, Multiplikation 31, miteinander verknüpft. Der Proportionalbeiwert kp kann entweder konstant sein oder in Abhängigkeit der Eingangsgröße E 1 berechnet werden. Wie in Figur 5 dargestellt, entspricht die Eingangsgröße E 1 der gefilterten Motordrehzahl nMOT und dem gefilterten leistungsbestimmenden Signal ve.

In Figur 7 ist ein Zeitdiagramm für die Wirkungsweise der Ausreißer-Erkennung 23 dargestellt. Der Kurvenzug mit der durchgezogenen Linie, entsprechend den Punkten A bis F, entspricht einem angenommenen Verlauf des Verbrennungs-Höchstdrucks pMAX(i). Der Kurvenzug mit der strich-zwei-punktierten Linie, entsprechend den Punkten G bis M, entspricht dem Diagnosewert pMD(i), also der Ausgangsgröße der Ausreißer-Erkennung 23. Der Zeitraum zwischen zwei auf der Abszisse aufgetragenen Zeitpunkten entspricht der Abtastzeit TA. Der Kurvenzug des Diagnosewerts pMD(i) ist zeitlich gegenüber dem Kurvenzug des Verbrennungs-Höchstdrucks pMAX(i) um eine Abtastzeit versetzt.

Für die weitere Erläuterung wird davon ausgegangen, dass die Ausreißer-Erkennung anhand von drei Werten des Verbrennungs-Höchstdrucks pMAX(i) erfolgt: pMAX(1) bis pMAX(3). Selbstverständlich ist es auch möglich, mehr Werte zu verwenden, ohne das Wesen der Erfindung zu verändern. Diese drei Messwerte pMAX(1) bis pMAX(3) entsprechen beispielsweise den Punkten C, D und E. Zum Zeitpunkt t5 wird aus dem ersten Wert und dem dritten Wert der Mittelwert bestimmt. Dieser Mittelwert ist in Figur 7 als gestrichelte Linie mit dem Ordinatenwert MW(CE) dargestellt. Danach wird vom Verbrennungs-Höchstdruckwert des Punktes D, also dem zweiten Messwert pMAX(2), der Mittelwert MW(CE) subtrahiert. Diese Differenz ist negativ. Der Betrag ist in Figur 7 als dp dargestellt. Bei vorliegendem Beispiel wurde davon ausgegangen, dass diese Differenz dp kleiner als ein Grenzwert GW, z. B. - 5 bar, ist. In diesem Fall wird der Verbrennungs-Höchstdruckwert des Punktes D als nicht plausibel erkannt, und die Ausreißer-Erkennung 23 setzt den zweiten Modus. Im zweiten Modus wird der Diagnosewert pMD(i) auf den Mittelwert MW gesetzt. In Figur 7 entspricht dieser gesetzte Diagnosewert pMD(i) dem Wert des Punktes L.

Beim nächsten Abtastschritt wird, also zum Zeitpunkt t6, aus den Werten der Punkte D und F der entsprechende Mittelwert bestimmt. Danach wird der zweite Wert, hier der Verbrennungs-Höchstdruckwert des Punktes E, in Beziehung zu diesem Mittelwert gesetzt.

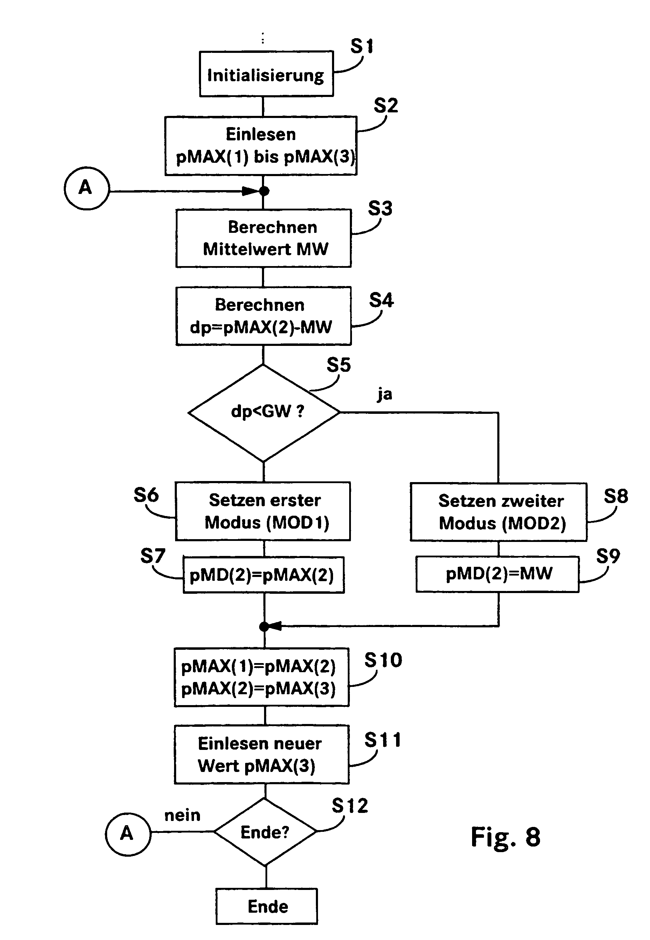

In Figur 8 ist ein Programmablaufplan für die Diagnostizierung des Verbrennungs-Höchstdruckwerts pMAX(i) in vereinfachter Form dargestellt. Bei diesem Programmablaufplan wurde das Beispiel der Figur 7 zugrunde gelegt. Bei Schritt S 1 werden Anfangswerte gesetzt. Danach werden bei Schritt S2 drei aktuelle Werte des Verbrennungs-Höchstdrucks pMAX(1) bis pMAX(3) eingelesen. Aus dem ersten und dritten Wert des Verbrennungs-Höchstdrucks wird sodann der Mittelwert MW berechnet, Schritt S3. Im Schritt S4 wird eine Differenz dp des zweiten Werts des Verbrennungs-Höchstdrucks pMAX(2) zum Mittelwert MW berechnet. Danach wird bei Schritt S5 geprüft, ob diese Differenz kleiner als ein Grenzwert GW ist. Ist die Abfrage positiv, so wird bei Schritt S8 der zweite Modus MOD2 gesetzt und bei Schritt S9 der Diagnosewert pMD(2) auf den Mittelwert MW gesetzt. Ist die Abfrage im Schritt S5 negativ, d. h. der zweite Wert pMAX(2) des Verbrennungs-Höchstdrucks ist plausibel, setzt die Ausreißer-Erkennung 23 den ersten Modus MOD1, Schritt S6. Danach wird bei Schritt S7 der Diagnosewert pMD(2) auf den zweiten Wert pMAX(2) gesetzt. Bei Schritt S 10 wird der erste Wert pMAX(1) mit dem zweiten Wert pMAX(2) des Verbrennungs-Höchstdrucks bzw. der zweite Wert pMAX(2) mit dem dritten Wert pMAX(3) überschrieben. Danach wird bei Schntt S 11 ein neuer Verbrennungs-Höchstdruck pMAX(3) eingelesen. Bei Schritt S 12 wird geprüft, ob eine Endebedingung erkannt wird. Ist dies nicht der Fall, so verzweigt der Programmablaufplan zum Punkt A mit der erneuten Berechnung des Mittelwerts MW. Wird eine Endebedingung bei Schritt S 12 erkannt, so ist der Programmablauf beendet.

Das erfindungsgemäße Regelsystem kann bei einer Brennkraftmaschine verwendet werden, bei der jeder Zylinder erfasst wird. Die Regelung des Verbrennungs-Höchstdrucks über den Einspritzbeginn erfolgt somit zylinderindividuell. Alternativ kann das Regelsystem auch bei einer Brennkraftmaschine verwendet werden, bei der nur eine vorgebbare Anzahl von Zylindern einen entsprechenden Drucksensor aufweist. In diesem Fall sieht die Erfindung vor, dass aus den gemessenen Verbrennungs-Höchstdruckwerten der vorgegebenen Zylinder ein repräsentativer Verbrennungs-Höchstdruck und hieraus ein repräsentativer Einspritzbeginn berechnet wird. Der repräsentative Einspritzbeginn wird sodann zur Regelung aller Zylinder verwendet.

### Bezugszeichenliste

- 1: Brennkraftmaschine
- 2: Kraftstofftank
- 3: Erste Pumpe
- 4: Drosselventil
- 5: Zweite Pumpe
- 6: Hochdruck-Speicher (Rail)
- 7: Injektor
- 8: Drucksensor Zylinder
- 9: Rail-Drucksensor
- 10: Elektronisches Motorsteuergerät
- 11: Kupplung
- 12: Motorlast
- 13: Drehzahlsensoren
- 14: Drehzahl-Regler
- 15: Motor-Moment-Regler
- 16: Auswahlmittel
- 17: Funktionsblock Erfassen und Filtern
- 18: Funktionsblock Erfassen und Filtern
- 19: Funktionsblock
- 20: Einspritzbeginn-Regler
- 21: Begrenzungsglied
- 22: Summationspunkt
- 23: Ausreißer-Erkennung
- 24: Summationspunkt
- 25: Filter
- 26: Filter
- 27: Kennfeld
- 28: Abtastzeit
- 29: Begrenzungsglied
- 30: Multiplikation
- 31: Multiplikation
- 32: Summation

## Patentansprüche

1. Regelsystem für eine Brennkraftmaschine (1), bei der ein Verbrennungs-Höchstdruck (pMAX(i)) mittels einer Anreisser-Erkennung (23) diagnostiziert wird, ein erster (MOD1) oder zweiter Modus (MOD2) bestimmt wird und in Abhängigkeit der Modi ein Diagnosewert (pMD(i)) zur Beeinflussung des Einspritzbeginns (SB) gesetzt wird, wobei über die Veränderung des Einpritzbeginns (SB) der Verbrennungs-Höchstdruck geregelt wird, **dadurch gekennzeichnet, dass** aus einem ersten (pMAX(1)) und n-ten Verbrennungs-Höchstdruckwert (pMAX(n)) ein Mittelwert (MW) berechnet wird, für jeden weiteren Verbrennungs-Höchstdruckwert (pMAX(i), i=2...(n-1)) jeweils eine Differenz (dp) zum Mittelwert (MW) berechnet wird (dp=pMAX(i)-MW) und der erste Modus (MOD1) gesetzt wird, wenn die Differenz (dp) größer oder gleich einem Grenzwert (GW) ist (dp≥GW) oder der zweite Modus (MOD2) gesetzt wird, wenn die Differenz kleiner dem Grenzwert (GW) ist (dp<GW).

2. Regelsystem nach Anspruch 1, **dadurch gekennzeichnet, dass** im ersten Modus (MOD1) der Diagnosewert (pMD(i)) auf den aktuellen Verbrennungs-Höchstdruckwert (pMAX(i)) gesetzt wird.

3. Regelsystem nach Anspruch 1, **dadurch gekennzeichnet, dass** im zweiten Modus (MOD2) der Diagnosewert (pMD(i)) auf den Mittelwert (MW) gesetzt wird.

4. Regelsystem nach Anspruch 2 und 3, **dadurch gekennzeichnet, dass** der Diagnosewert (pMD(i)) gefiltert wird.

5. Regelsystem nach Anspruch 2, 3 oder 4, **dadurch gekennzeichnet, dass** aus dem Diagnosewert (pMD(i)) sowie einem Verbrennungs-Höchstdruck-Sollwert (pMSW) eine Regelabweichung (dpMX(i)) bestimmt wird (dpMX(i)=pMSW-pMD(i)) und aus der Regelabweichung (dpMX(i)) mittels eines Einspritzbeginn-Reglers (20) der Einspritzbeginn (SB) bestimmt wird.

6. Regelsystem nach Anspruch 5, **dadurch gekennzeichnet, dass** der Verbrennungs-Höchstdruck-Sollwert (pMSW) über ein Kennfeld bestimmt wird, wobei das Kennfeld eine Funktion einer Motordrehzahl (nMOT) und eines leistungsbestimmenden Signals (ve) darstellt.

7. Regelsystem nach Anspruch 5, **dadurch gekennzeichnet, dass** der Einspritzbeginn (SB) bei einer negativen Regelabweichung (dpMX(i)<0)) nach spät verändert wird.

8. Regelsystem nach Anspruch 5, **dadurch gekennzeichnet, dass** der Einspritzbeginn (SB) bei einer positiveri Regelabweichung (dpMX(i)>0)) nach früh verändert wird.

9. Regelsystem nach den Ansprüchen 5 bis 8, **dadurch gekennzeichnet, dass** der vom Einspritzbeginn-Regler (20) berechnete Einspritzbeginn (SB) mittels eines Begrenzungsglieds (21) limitiert wird.

10. Regelsystem nach Anspruch 9, **dadurch gekennzeichnet, dass** das Begrenzungsglied (21) einen Min/Max-Wert beinhaltet, so dass der Einspritzbeginn (SB) auf einen minimal (MIN) und maximal zulässigen Wert (MAX) begrenzt wird.

11. Regelsystem nach Anspruch 9, **dadurch gekennzeichnet, dass** das Begrenzungsglied (21) eine Kennlinie (KL) beinhaltet, wobei die Kennlinie (KL) eine Funktion der Motordrehzahl (KL=f(nMOT)) oder des leistungsbestimmenden Signals (ve) darstellt (KL=f(ve)).

12. Regelsystem nach Anspruch 9, **dadurch gekennzeichnet, dass** das Begrenzungsglied (21) ein Kennfeld (KF) aufweist, wobei das Kennfeld (KF) ein Funktion der Motordrehzahl (nMOT) und dem leistungsbestimmenden Signal (ve) darstellt (KF=f(nMOT,ve)).

13. Regelsystem nach einem der vorausgegangenen Ansprüche, **dadurch gekennzeichnet, dass** in die Berechnung des Einspritzbeginns (SB) zusätzlich ein Einspritzbeginn-Vorsteuerwert (SB(VS)) miteingeht.

14. Regelsystem nach Anspruch 13, **dadurch gekennzeichnet, dass** der Einspritzbeginn-Vorsteuerwert (SB(VS)) über ein Kennfeld (27) bestimmt wird, wobei das Kennfeld (27) eine Funktion der Motordrehzahl (nMOT) und des leistungsbestimmenden Signals (ve) darstellt.

15. Regelsystem nach Anspruch 5, **dadurch gekennzeichnet, dass** der Einspritzbeginn-Regler (20).einen integrierenden Anteil (I-Anteil) aufweist, dessen Zeitkonstante (Tn) entweder konstant ist (Tn=Konst) oder in Abhängigkeit der Motordrehzahl (nMOT) berechnet wird (Tn=f(nMOT)).

16. Regelsystem nach Anspruch 15, **dadurch gekennzeichnet, dass** der Einspritzbeginn-Regler (20) zur Begrenzung des I-Anteils zusätzlich ein Begrenzungsglied (29) aufweist, wobei das Begrenzungsglied (29) gemäß den Ansprüchen 10 bis 12 ausgeführt ist.

17. Regelsystem nach Anspruch 11, 12 oder 16, **dadurch gekennzeichnet, dass** die Motordrehzahl (nMOT) und das leistungsbestimmende Signal (ve) zusätzlich gefiltert werden.

18. Regelsystem nach Anspruch 17, **dadurch gekennzeichnet, dass** der Einspritzbeginn-Regler (20) zusätzlich einen proportionalen Anteil (P-Anteil) aufweist.

19. Regelsystem nach Anspruch 18, **dadurch gekennzeichnet, dass** ein Proportionalbeiwert (kp) des P-Anteils konstant ist (kp=Konst).

20. Regelsystem nach Anspruch 18, **dadurch gekennzeichnet, dass** der Proportionalbeiwert (kp) des P-Anteils in Abhängigkeit des leistungsbestimmenden Signals (ve) berechnet wird (kp=f(ve)).

21. Regelsystem nach Anspruch 20, **dadurch gekennzeichnet, dass** der Proportionalbeiwert (kp) des P-Anteils zusätzlich in Abhängigkeit der Motordrehzahl (nMOT) berechnet wird (kp=f(nMOT, ve)).

22. Regelsystem nach Anspruch 20 oder 21, **dadurch gekennzeichnet, dass** die Motordrehzahl (nMOT) und das leistungsbestimmende Signal (ve) zur Berechnung des P-Anteils zusätzlich gefiltert werden.

23. Regelsystem nach einem der vorausgegangenen Ansprüche, **dadurch gekennzeichnet, dass** von jedem Zylinder der Brennkraftmaschine (1) der Verbrennungs-Höchstdruck (pMAX(i)) erfasst wird und die Regelung des Verbrennungs-Höchstdrucks (pMAX(i)) über den Einspritzbeginn (SB) zylinderindividuell durchgeführt wird.

24. Regelsystem nach einem der vorausgegangenen Ansprüche, **dadurch gekennzeichnet, dass** bei einer vorgegebenen Anzahl (k) von Zylindern der Brennkraftmaschine (1) der Verbrennungs-Höchstdruckwert (pMAX(i)) erfasst wird.

25. Regelsystem nach Anspruch 24, **dadurch gekennzeichnet, dass** aus den Verbrennungs-Höchstdruckwerten (pMAX(i)) der vorgegebenen Zylinder ein repräsentativer Verbrennungs-Höchstdruck (pMAX(RE)) und ein repräsentativer Einspritzbeginn (SB(RE)) bestimmt wird.

26. Regelsystem nach Anspruch 25, **dadurch gekennzeichnet, dass** der repräsentative Einspritzbeginn (SB(RE)) zur Regelung aller Zylinder verwendet wird.

## Claims

1. Regulating system for an internal combustion engine (1), in which a combustion maximum pressure (pMAX(i)) is diagnosed by means of spurious data detection (23), a first mode (MOD1) or second mode (MOD2) is determined and a diagnostic value (pMD(i)) for influencing the start (SB) of injection is set as a function of the modes, with the combustion maximum pressure being regulated by changing the start (SB) of injection, **characterized in that** a mean value (MW) is calculated from a first (pMAX(1)) and n-th combustion maximum pressure value (pMAX(n)), and for each further combustion maximum pressure value (pMAX(i), i=2...(n-1)) a difference (dp) with respect to the mean value (MW) is respectively calculated (dp=pMAX(i)-MW), and the first mode (MOD1) is set if the difference (dp) is greater than or equal to a limiting value (GW), (dp≥GW), or the second mode (MOD2) is set if the difference is less than the limiting value (GW), (dp<GW).

2. Regulating system according to Claim 1, **characterized in that** in the first mode (MOD1) the diagnostic value (pMD(i)) is set to the current combustion maximum pressure value (pMAX(i)).

3. Regulating system according to Claim 1, **characterized in that** in the second mode (MOD2) the diagnostic value (pMD(i)) is set to the mean value (MW).

4. Regulating system according to Claim 2 and 3, **characterized in that** the diagnostic value (pMD(i)) is filtered.

5. Regulating system according to Claim 2, 3 or 4, **characterized in that** a control error (dpMX(i)) is determined from the diagnostic value (pMD(i)) and a combustion maximum pressure setpoint value (pMSW), (dpMX(i)=pMSW-pMD(i)), and the start (SB) of injection is determined from the control error (dpMX(i)) by means of a start-of-injection regulator (20).

6. Regulating system according to Claim 5, **characterized in that** the combustion maximum pressure setpoint value (pMSW) is determined by means of a characteristic diagram, wherein the characteristic diagram constitutes a function of an engine speed (nMOT) and of a power-determining signal (ve).

7. Regulating system according to Claim 5, **characterized in that** the start (SB) of injection is changed in the retarded direction when there is a negative control error (dpMx(i)<0)).

8. Regulating system according to Claim 5, **characterized in that** the start (SB) of injection is changed in the early direction when there is a positive control error (dpMx(i)>0)).

9. Regulating system according to Claims 5 to 8, **characterized in that** the start (SB) of injection which is calculated by the start-of-injection regulator (20) is limited by means of a limiting element (21).

10. Regulating system according to Claim 9, **characterized in that** the limiting element (21) includes a min/max value so that the start (SB) of injection is limited to a minimum permitted value (MIN) and maximum permitted value (MAX).

11. Regulating system according to Claim 9, **characterized in that** the limiting element (21) includes a characteristic curve (KL), wherein the characteristic curve (KL) constitutes a function of the engine speed (KL=f(nMOT)) or of the power-determining signal (ve), (KL=f(ve)).

12. Regulating system according to Claim 9, **characterized in that** the limiting element (21) has a characteristic diagram (KF), wherein the characteristic diagram (KF) constitutes a function of the engine speed (nMOT) and the power-determining signal (ve), (KF=f(nMOT,ve)).

13. Regulating system according to one of the preceding claims, **characterized in that** the calculation of the start (SB) of injection additionally includes a start-of-injection pilot control value (SB(VS)).

14. Regulating system according to Claim 13, **characterized in that** the start-of-injection pilot control value (SB(VS)) is determined by means of a characteristic diagram (27), wherein the characteristic diagram (27) constitutes a function of the engine speed (nMOT) and of the power-determining signal (ve).

15. Regulating system according to Claim 5, **characterized in that** the start-of-injection regulator (20) has an integrating component (I component) whose time constant (Tn) is either constant (Tn=Konst) or is calculated as a function of the engine speed (nMOT), (Tn=f(nMOT)).

16. Regulating system according to Claim 15, **characterized in that** in order to limit the I component the start-of-injection regulator (20) additionally has a limiting element (29), wherein the limiting element (29) is embodied according to Claims 10 to 12.

17. Regulating system according to Claim 11, 12 or 16, **characterized in that** the engine speed (nMOT) and the power-determining signal (ve) are additionally filtered.

18. Regulating system according to Claim 17, **characterized in that** the start-of-injection regulator (20) additionally has a proportional component (P component).

19. Regulating system according to Claim 18, **characterized in that** a proportional coefficient (kp) of the P component is constant (kp=Konst).

20. Regulating system according to Claim 18, **characterized in that** the proportional coefficient (kp) of the P component is calculated as a function of the power-determining signal (ve), (kp=f(ve)).

21. Regulating system according to Claim 20, **characterized in that** the proportional coefficient (kp) of the P component is additionally calculated as a function of the engine speed (nMOT), (kp=f(nMOT,ve)).

22. Regulating system according to Claim 20 or 21, **characterized in that** the engine speed (nMOT) and the power-determining signal (ve) are additionally filtered in order to calculate the P component.

23. Regulating system according to one of the preceding claims, **characterized in that** the combustion maximum pressure (pMAX(i)) is sensed by each cylinder of the internal combustion engine (1) and the combustion maximum pressure (pMAX(i)) is regulated on a cylinder-specific basis by means of the start (SB) of injection.

24. Regulating system according to one of the preceding claims, **characterized in that** the combustion maximum pressure value (pMAX(i)) is sensed for a given number (k) of cylinders of the internal combustion engine (1).

25. Regulating system according to Claim 24, **characterized in that** a representative combustion maximum pressure (pMAX(RE)) and a representative start (SB(RE)) of injection is determined from the combustion maximum pressure values (pMAX(i)) of the predefined cylinders.

26. Regulating system according to Claim 25, **characterized in that** the representative start (SB(RE)) of injection is used to regulate all the cylinders.

## Revendications

1. Système de régulation d'un moteur à combustion interne (1) dans lequel on diagnostique une pression maximale de combustion (pMAX(i)) au moyen de la détection d'une fuite (23), on définit un premier mode (MOD1) ou un deuxième mode (MOD2) et on positionne une valeur de diagnostic (pMD(i)) en fonction des modes pour agir sur le début de l'injection (SB) ce qui permet de régler la pression maximale de combustion par l'intermédiaire de la variation du début de l'injection (SB), **caractérisé en ce qu'**on calcule une valeur moyenne (MW) à partir d'une première valeur (pMAX(1)) et d'une nième valeur de pression maximale de combustion (pMAX(n)), pour chaque valeur suivante de pression maximale de combustion (pMAX(i), i=2 ... (n-1)), on calcule chaque fois une différence (dp) (dp=pMAX(i)-MW) par rapport à la valeur moyenne (MW) et on positionne le premier mode (MOD1) lorsque la différence (dp) est supérieure ou égale (dp≥GW) à une valeur limite (GW), ou on positionne le deuxième mode (MOD2) lorsque la différence est inférieure (dp<GW) à la valeur limite (GW).

2. Système de régulation selon la revendication 1, **caractérisé en ce que** dans le premier mode (MOD1) la valeur de diagnostic (pMD(i)) est positionnée sur la valeur courante de pression maximale de combustion (pMAX(i)).

3. Système de régulation selon la revendication 1, **caractérisé en ce que** dans le deuxième mode (MOD2) la valeur de diagnostic (pMD(i)) est positionnée sur la valeur moyenne (MW).

4. Système de régulation selon les revendications 2 et 3, **caractérisé en ce que** la valeur de diagnostic (pMD(i)) est filtrée.

5. Système de régulation selon les revendications 2, 3 ou 4, **caractérisé en ce que** la valeur de diagnostic (pMD(i)) ainsi qu'une valeur de consigne de la pression maximale de combustion (pMSW) permettent de définir un écart de régulation (dpMX(i)) (dpMX(i)=pMSW-pMD(i)) et à partir de l'écart de régulation (dpMX(i)), de définir le début de l'injection (SB) au moyen d'un régulateur du début de l'injection (20).

6. Système de régulation selon la revendication 5, **caractérisé en ce que** la valeur de consigne de la pression maximale de combustion (pMSW) est définie par l'intermédiaire d'un diagramme caractéristique, le diagramme caractéristique constituant une fonction de la vitesse de rotation du moteur (nMOT) et d'un signal (ve) définissant la puissance.

7. Système de régulation selon la revendication 5, **caractérisé en ce que** le début de l'injection (SB) est modifié dans le sens du retard lors d'un écart négatif de la régulation (dpMX(i)<0).

8. Système de régulation selon la revendication 5, **caractérisé en ce que** le début de l'injection (SB) est modifié dans le sens de l'avance lors d'un écart positif de la régulation (dpMX(i)>0).

9. Système de régulation selon les revendications 5 à 8, **caractérisé en ce que** le début de l'injection (SB) calculé par le régulateur du début de l'injection (20), est limité au moyen d'un élément de limitation (21).

10. Système de régulation selon la revendication 9, **caractérisé en ce que** l'élément de limitation (21) comporte une valeur min/max de manière à limiter le début de l'injection (SB) à une valeur admissible minimale (MIN) et maximale (MAX).

11. Système de régulation selon la revendication 9, **caractérisé en ce que** l'élément de limitation (21) comporte une courbe caractéristique (KL), la courbe caractéristique (KL) constituant une fonction de la vitesse de rotation du moteur (KL=f(nMOT)) ou du signal (ve) définissant la puissance (KL=f(ve)).

12. Système de régulation selon la revendication 9, **caractérisé en ce que** l'élément de limitation (21) comporte un diagramme caractéristique (KF), le diagramme caractéristique (KF) constituant une fonction de la vitesse de rotation du moteur (nMOT) et du signal (ve) définissant la puissance, (KF=f(nMOT, ve)).

13. Système de régulation selon une des revendications précédentes, **caractérisé en ce que** le calcul du début de l'injection (SB) intègre une valeur d'anticipation de la commande de début de l'injection (SB(VS)).

14. Système de régulation selon la revendication 13, **caractérisé en ce que** la valeur d'anticipation de la commande de début de l'injection (SB(VS)) est définie par l'intermédiaire d'un diagramme caractéristique (27), le diagramme caractéristique (27) constituant une fonction de la vitesse de rotation du moteur (nMOT) et du signal (ve) définissant la puissance.

15. Système de régulation selon la revendication 5, **caractérisé en ce que** le régulateur du début de l'injection (20) comporte une composante d'intégration (composante I) dont la constante de temps (Tn) est soit constante (Tn=Konst) soit calculée en fonction de la vitesse de rotation du moteur (nMOT) (Tn=f(nMOT)).

16. Système de régulation selon la revendication 15, **caractérisé en ce que** le régulateur du début de l'injection (20) comporte de plus un élément de limitation (29) pour la limitation de la composante I, l'élément de limitation (29) étant réalisé selon les revendications 10 à 12.

17. Système de régulation selon la revendication 11, 12 ou 16, **caractérisé en ce que** la vitesse de rotation du moteur (nMOT) et le signal (ve) définissant la puissance, sont de plus filtrés.

18. Système de régulation selon la revendication 17, **caractérisé en ce que** le régulateur du début de l'injection (20) comporte de plus une composante proportionnelle (composante P).

19. Système de régulation selon la revendication 18, **caractérisé en ce qu'**un coefficient proportionnel (kp) de la composante P, est constant (kp=Konst).

20. Système de régulation selon la revendication 18, **caractérisé en ce que** le coefficient proportionnel (kp) de la composante P, est calculé en fonction du signal (ve) définissant la puissance (kp=f(ve)).

21. Système de régulation selon la revendication 20, **caractérisé en ce que** le coefficient proportionnel (kp) de la composante P, est calculé de plus en fonction de la vitesse de rotation du moteur (nMOT) (kp=f(nMOT, ve)).

22. Système de régulation selon la revendication 20 ou 21, **caractérisé en ce que** la vitesse de rotation du moteur (nMOT) et le signal (ve) définissant la puissance servant au calcul de la composante P, sont de plus filtrés.

23. Système de régulation selon une des revendications précédentes, **caractérisé en ce que** pour chaque cylindre du moteur à combustion interne (1), on enregistre la pression maximale de combustion (pMAX(i)) et on effectue pour chaque cylindre individuellement, la régulation de la pression maximale de combustion (pMAX(i)) par l'intermédiaire du début de l'injection (SB).

24. Système de régulation selon une des revendications précédentes, **caractérisé en ce qu'**on enregistre la pression maximale de combustion (pMAX(i)) pour un nombre défini (k) de cylindres du moteur à combustion interne (1).

25. Système de régulation selon la revendication 24, **caractérisé en ce qu'**on définit une pression maximale de combustion représentative (pMAX(RE)) et un début de l'injection représentatif (SB(RE)) à partir des valeurs de pression maximale de combustion (pMAX(i)) des cylindres définis.

26. Système de régulation selon la revendication 25, **caractérisé en ce que** le début représentatif de l'injection (SB(RE)) est utilisé pour la régulation de tous les cylindres.
